(19) Europäisches Patentamt / European Patent Office / Office européen des brevets

(11) **EP 4 621 983 A1**

(12) **EUROPEAN PATENT APPLICATION**
published in accordance with Art. 153(4) EPC

(43) Date of publication:
**24.09.2025 Bulletin 2025/39**

(21) Application number: **24783965.7**

(22) Date of filing: **31.01.2024**

(51) International Patent Classification (IPC):
***H01M 50/552*** (2021.01)

(52) Cooperative Patent Classification (CPC):
Y02E 60/10

(86) International application number:
**PCT/CN2024/074995**

(87) International publication number:
**WO 2024/207880 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2023 CN 202310347781**

(71) Applicant: **Contemporary Amperex Technology
Co., Limited
Fujian 352100 (CN)**

(72) Inventors:
• **CHEN, Shengwang
Ningde, Fujian 352100 (CN)**
• **GUO, Zhijun
Ningde, Fujian 352100 (CN)**
• **WANG, Peng
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **BATTERY CELL, MANUFACTURING METHOD FOR HOUSING ASSEMBLY, BATTERY, AND ELECTRIC DEVICE**

(57) This application discloses a battery cell, a manufacturing method of a housing assembly, a battery, and an electric apparatus. The battery cell includes a shell, an electrode terminal, and a sealing member. The electrode terminal has a groove portion disposed along an axial direction, where the groove portion includes a first groove section and a second groove section, the first groove section is located at an end of the second groove section facing away from an interior of the shell, the first groove section is located in a flange portion, the second groove section is at least partially located in the flange portion, and a radial dimension of the first groove section is larger than a radial dimension of the second groove section, thereby forming an annular step surface at a junction of the first groove section and the second groove section. The sealing member is configured to seal the groove portion, where the sealing member includes a body portion and a guide portion, the body portion is disposed in the first groove section and supported on the annular step surface, the guide portion is disposed in the second groove section, the sealing member is fixedly connected to the electrode terminal, and the battery cell is electrically connected to the outside through the sealing member. Through the above approach, a connection effect between the sealing member and the electrode terminal can be improved.

FIG. 5

## Description

### TECHNICAL FIELD

This application relates to the field of battery technology, and in particular, to a battery cell, a manufacturing method of a housing assembly, a battery, and an electric apparatus.

### BACKGROUND

With the development of battery technology, battery cells are applied in an increasing number of fields and are gradually replacing traditional petrochemical energy in the field of automotive power. A battery cell is capable of storing chemical energy and controllably converting the chemical energy into electrical energy. In a recyclable battery cell, active substances can be activated by charging after discharge for continued use.

A battery cell typically includes an electrode assembly, an electrode terminal, a sealing member, and a shell, where the shell can accommodate the electrode assembly. The electrode assembly is electrically connected to the outside through the electrode terminal. The sealing member seals a recessed portion of the electrode terminal and is connected to the electrode terminal. The electrode terminal is electrically connected to the outside through the sealing member. In the structure of an existing battery cell, an area of a region of the electrode terminal for supporting the sealing member is relatively small, which is not conducive to connecting the electrode terminal and the sealing member during an assembly process, thereby affecting a connection effect between the sealing member and the electrode terminal.

### SUMMARY

In view of the above issues, this application provides a battery cell, a manufacturing method of a housing assembly, a battery, and an electric apparatus, capable of increasing a matching area between a body portion of a sealing member and an electrode terminal while maintaining sufficient connection strength between a flange portion and an insertion portion, thereby improving a connection effect between the sealing member and the electrode terminal.

According to a first aspect, this application provides a battery cell. The battery cell includes a shell, an electrode terminal, and a sealing member, where the shell includes a wall portion, and the wall portion is provided with a lead-out hole; the electrode terminal includes an insertion portion and a flange portion connected to each other along an axial direction of the electrode terminal, where the insertion portion is disposed in the lead-out hole, the flange portion is located on a side of the insertion portion away from an interior of the shell, and in a radial direction of the electrode terminal, the flange portion at least partially extends beyond the insertion portion; the electrode terminal has a groove portion disposed along the axial direction, where the groove portion includes a first groove section and a second groove section, the first groove section is located at an end of the second groove section facing away from the interior of the shell, the first groove section is located in the flange portion, the second groove section is at least partially located in the flange portion, and a radial dimension of the first groove section is larger than a radial dimension of the second groove section, thereby forming an annular step surface at a junction of the first groove section and the second groove section; and the sealing member is configured to seal the groove portion, the sealing member includes a body portion and a guide portion, the body portion is disposed in the first groove section and supported on the annular step surface, the guide portion is disposed in the second groove section, the sealing member is fixedly connected to the electrode terminal, and the battery cell is electrically connected to the outside through the sealing member.

Through the above approach, by providing the first groove section and the second groove section on the flange portion of the electrode terminal and setting the radial dimension of the first groove section to be larger than the radial dimension of the second groove section, since the radial dimension of the first groove section is larger, a matching area between the body portion of the sealing member and the electrode terminal can be increased. In addition, since the radial dimension of the second groove section is smaller, the damage to the electrode terminal due to insufficient connection strength between the flange portion and the insertion portion can be reduced, thereby improving a connection effect between the sealing member and the electrode terminal. Further, by providing the first groove section, a dimension of the battery cell in the axial direction can be reduced, and the body portion in the first groove section can serve a limiting function to reduce the risk of the sealing member slipping out of the groove portion during an assembly process.

In some embodiments, an outer end surface of the body portion facing away from the interior of the shell protrudes beyond an outer end surface of the flange portion facing away from the interior of the shell, and the body portion is welded and fixed to the flange portion.

Through the above approach, welding energy can more easily act directly on the body portion, reducing an adverse effect of the welding energy on the outer end surface of the flange portion facing away from the interior of the shell.

In some embodiments, the battery cell includes an insulating member, where the insulating member surrounds a periphery of the electrode terminal and is located between the electrode terminal and the wall portion; and the electrode terminal, the sealing member, and the insulating member are arranged such that welding energy reflected from an outer peripheral surface of a protruding portion of the body portion relative to the flange portion and transmitted toward the insulating member is blocked by the outer end surface of the flange portion.

Through the above approach, an adverse effect of the welding energy on the insulating member can be reduced.

In some embodiments, the outer end surface of the flange portion protrudes beyond an outer end surface of the insulating member facing away from the interior of the shell, and satisfies the following relationship:

$$\arctan(H5/((D4-D3)/2))>\arctan((H3-H2)/((D3-D2)/2)),$$

where H5 is a protruding height of the outer end surface of the flange portion relative to the outer end surface of the insulating member, D4 is a radial dimension of the outer end surface of the insulating member, D3 is a radial dimension of the outer end surface of the flange portion, H3 is an axial thickness of the body portion located in the first groove section, H2 is an axial depth of the first groove section, and D2 is a radial dimension of the outer end surface of the body portion.

Through the above approach, by reasonably setting dimensional parameters of related components, an adverse effect of the welding energy on the insulating member is reduced.

In some embodiments, in the axial direction, a protruding height of the outer end surface of the body portion relative to the outer end surface of the flange portion is greater than or equal to 0.1 mm.

Through the above approach, the welding energy can more easily act directly on the body portion, and an adverse effect of the welding energy on the outer end surface of the flange portion facing away from the interior of the shell can be reduced.

In some embodiments, in the axial direction, an axial thickness of the body portion located in the first groove section is less than or equal to 0.5 times a difference between an axial thickness of the flange portion and an axial depth of the first groove section, and the body portion is welded and fixed to the flange portion.

Through the above approach, welding strength between the body portion and the flange portion can be improved.

In some embodiments, an axial thickness of the body portion located in the first groove section is greater than or equal to 0.3 mm, and an axial depth of the first groove section is greater than or equal to 0.2 mm.

Through the above approach, setting the axial thickness of the body portion located in the first groove section to be greater than or equal to 0.3 mm can improve a load-bearing capacity of the body portion, enhancing connection strength when the body portion is connected to the flange portion.

By setting the axial depth of the first groove section to be greater than or equal to 0.2 mm, a limiting function of the groove portion on the sealing member can be improved, and a dimension of the battery cell in the axial direction can be reduced.

In some embodiments, in the radial direction, a difference between a radial dimension of the outer end surface of the body portion and a radial dimension of an inner ring edge of the annular step surface is greater than or equal to 0.3 mm.

Through the above approach, a contact area between the body portion and the flange portion can be increased, thereby improving stability of support provided by the flange portion to the body portion.

In some embodiments, the outer end surface of the body portion facing away from the interior of the shell includes a central region and a welding region surrounding the central region, where the central region is configured to be connected to an external conductive component, and the welding region is configured to be welded to the flange portion.

Through the above approach, a welding trajectory when the body portion is welded to the flange portion can surround the central region, thereby forming a weld mark located in the welding region and surrounding the central region, enabling balanced connection between the body portion and the flange portion and improving connection stability.

In some embodiments, the welding region is recessed toward the interior of the shell relative to the central region.

Through the above approach, the risk of the weld mark protruding beyond the central region and affecting connection between the central region and an external conductive component can be reduced.

In some embodiments, in the axial direction, a recess depth of the welding region relative to the central region is greater than or equal to 0.1 mm.

Through the above approach, the risk of the weld mark protruding beyond the central region and affecting connection between the central region and the external conductive component can be reduced.

In some embodiments, in the radial direction, a radial dimension of an inner ring edge of the welding region is less than or equal to a radial dimension of an inner ring edge of the annular step surface.

Through the above approach, an area of the welding region can be expanded, facilitating welding operations and contributing to improved welding strength.

In some embodiments, in the radial direction, a radial dimension of the first groove section is less than or equal to a radial dimension of the insertion portion.

Through the above approach, the risk of damage to the flange portion due to axial forces can be reduced.

In some embodiments, the flange portion and the insertion portion are integrally formed and bent relative to the insertion portion, and the first groove section is formed by stamping.

Through the above approach, a transition fillet between the flange portion and the insertion portion can be reduced using stamping, increasing a contact area between the flange portion and the body portion, and facilitating the support by the flange portion for the body portion.

In some embodiments, the flange portion and the insertion portion are integrally formed, and the electrode terminal includes a sealing portion integrally formed with the insertion portion, where the sealing portion seals an end of the insertion portion facing the interior of the shell to form the groove portion.

Through the above approach, a manufacturing process of the electrode terminal can be simplified.

In some embodiments, the groove portion is configured for injection of an electrolyte into the shell.

Through the above approach, structural complexity of the battery cell can be simplified, and the assembly efficiency of the battery cell can be improved.

In some embodiments, the sealing portion is provided with an electrolyte injection hole, where the electrolyte injection hole implements a communication between the interior of the shell to the groove portion.

Through the above approach, since a thickness of the sealing portion is relatively thin, formation of the electrolyte injection hole is facilitated, and injection of the electrolyte is made facilitated.

In some embodiments, the battery cell further includes a current collector plate and an electrode assembly disposed inside the shell, where the current collector plate is configured to connect a tab of the electrode assembly and the electrode terminal, and a side of the sealing portion facing away from the groove portion is welded to the current collector plate.

Through the above approach, by providing the current collector plate, electrical connection between the electrode terminal and the electrode assembly is facilitated. Utilizing a relatively thin thickness of the sealing portion for welding to the current collector plate enables electrical connection between the electrode terminal and the current collector plate from a side of the electrode terminal facing away from the current collector plate.

In some embodiments, the battery cell further includes an electrode assembly, the shell includes a housing and an end cap, an end of the housing is provided with an opening, the end cap covers the opening, the housing includes a sidewall and an end wall, the sidewall surrounds an outer side of the electrode assembly, the end wall is disposed opposite the opening, and the wall portion is the end cap or the end wall.

Through the above approach, the assembly efficiency of the battery cell can be improved.

In some embodiments, the guide portion and the second groove section are each configured in a frustum shape with a cross-section gradually decreasing in a direction toward the interior of the shell.

Through the above approach, during an assembly process of the battery cell, the guide portion can be guided into the second groove section, facilitating insertion of the sealing member into the groove portion and improving the assembly efficiency of the battery cell.

In some embodiments, in the axial direction, an axial depth of the first groove section is less than an axial depth of the second groove section.

Through the above approach, a load-bearing capacity at a junction between the flange portion and the insertion portion can be improved.

According to a second aspect, this application provides a manufacturing method of a housing assembly, including: providing a shell, where the shell includes a wall portion, and the wall portion is provided with a lead-out hole; inserting an electrode terminal into the lead-out hole, where an end of the electrode terminal facing away from an interior of the shell is configured in a cylindrical shape; stamping an end of the electrode terminal located on the wall portion and facing away from the interior of the shell to form an insertion portion located in the lead-out hole and a flange portion connected to the insertion portion in a bent manner, where the flange portion has an initial groove section disposed along an axial direction of the electrode terminal; and performing secondary stamping on an end of the insertion portion facing away from the interior of the shell, such that a portion of the initial groove section facing away from the interior of the shell is expanded into a first groove section, a remaining portion of the initial groove section forms a second groove section, and a radial dimension of the first groove section is larger than a radial dimension of the second groove section, thereby forming an annular step surface at a junction of the first groove section and the second groove section.

According to a third aspect, this application provides a battery including the above-described battery cell.

According to a fourth aspect, this application provides an electric apparatus including the above-described battery.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

**BRIEF DESCRIPTION OF DRAWINGS**

Persons of ordinary skill in the art will be clear about various other advantages and benefits by reading the detailed description of the preferred embodiments below. The accompanying drawings are merely intended to illustrate the preferred embodiments and are not intended to limit this application. Throughout the drawings, identical components are denoted by identical reference signs. In the accompanying drawings:

FIG. 1 is a schematic structural diagram of a vehicle according to one or more embodiments;
FIG. 2 is a schematic structural exploded view of a battery according to one or more embodiments;
FIG. 3 is a schematic structural top view of a battery cell according to one or more embodiments;
FIG. 4 is a cross-sectional schematic structural diagram of the battery cell shown in FIG. 3 along a C-C section;
FIG. 5 is a schematic diagram of part A of the battery cell shown in FIG. 4 with some parts hidden;
FIG. 6 is a schematic diagram of part B of the battery cell shown in FIG. 5;
FIG. 7 is a schematic structural diagram of an electrode terminal shown in FIG. 3;
FIG. 8 is a schematic diagram of structural changes of an electrode terminal during an assembly process; and
FIG. 9 is a schematic flowchart of a manufacturing method of a housing assembly according to one or more embodiments.

Reference signs in the specific embodiments are as follows:

1000a. vehicle;
100a. battery; 200a. controller; 300a. motor;
10a. box; 11a. first portion; 12a. second portion;
D1. radial dimension of inner ring edge of annular step surface; D2. radial dimension of outer end surface of body portion; D3. radial dimension of outer end surface of flange portion; D4. radial dimension of outer end surface of insulating member; D5. radial dimension of first groove section; D6. radial dimension of second groove section; D7. radial dimension of inner ring edge of welding region; D8. radial dimension of outer peripheral surface of insertion portion; H1. axial thickness of flange portion; H2. axial depth of first groove section; H3. axial thickness of body portion; H4. recess depth of welding region relative to central region; H5. protruding height of outer end surface of flange portion relative to outer end surface of insulating member; H6. axial depth of second groove section; 221. outer end surface of flange portion; 311. outer peripheral surface of protruding portion of body portion relative to flange portion; 601. outer end surface of insulating member facing away from interior of shell;
1. battery cell; 100b. housing assembly; 100. shell; 101. wall portion; 102. lead-out hole; 110. housing; 111. opening; 112. sidewall; 113. end wall; 120. end cap; 200. electrode terminal; 210. insertion portion; 220. flange portion; 230. groove portion; 231. first groove section; 232. second groove section; 233. annular step surface; 240. sealing portion; 241. electrolyte injection hole; 250. limiting flange; 260. initial groove section; 270. transition fillet; 300. sealing member; 310. body portion; 312. central region; 313. welding region; 320. guide portion; 400. current collector plate; 500. electrode assembly; 501. tab; 600. insulating member; and 801. weld mark.

**DESCRIPTION OF EMBODIMENTS**

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", "have", and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "multiple" means two or more, unless explicitly and specifically defined otherwise.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B.

In the description of the embodiments of this application, the term "multiple" means more than two (inclusive). Similarly, " multiple groups" means more than two (inclusive) groups, and " multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of these embodiments of this application rather than indicating or implying that the means or components mentioned must have specific orientations or must be constructed or manipulated according to specific orientations, and therefore shall not be construed as any limitations on these embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

With the development of battery technology, battery cells are applied in an increasing number of fields and are gradually replacing traditional fossil energy in the field of automotive power. A battery cell is capable of storing chemical energy and controllably converting the chemical energy into electrical energy. In a recyclable battery cell, active substances can be activated by charging after discharge for continued use.

A battery cell typically includes an electrode assembly, an electrode terminal, a sealing member, and a shell, where the shell is can accommodate the electrode assembly. The electrode assembly is electrically connected to the outside through the electrode terminal. The sealing member seals a recessed portion of the electrode terminal and is connected to the electrode terminal. The electrode terminal is electrically connected to the outside through the sealing member. In the structure of an existing battery cell, a matching area between the electrode terminal and the sealing member is relatively small, which is not conducive to connecting the electrode terminal and the sealing member during an assembly process, thereby affecting a connection effect between the sealing member and the electrode terminal.

To improve the connection effect between the sealing member and the electrode terminal, the electrode terminal can be configured to include an insertion portion and a flange portion connected to each other along an axial direction of the electrode terminal, where the flange portion is located on a side of the insertion portion away from an interior of the shell, and in a radial direction of the electrode terminal, the flange portion at least partially extends beyond the insertion portion; the electrode terminal has a groove portion disposed along the axial direction, where the groove portion includes a first groove section and a second groove section, the first groove section is located at an end of the second groove section facing away from the interior of the shell, the first groove section is located in the flange portion, the second groove section is at least partially located in the flange portion, and a radial dimension of the first groove section is larger than a radial dimension of the second groove section, thereby forming an annular step surface at a junction of the first groove section and the second groove section. The sealing member can be configured to include a body portion and a guide portion, where the body portion is disposed in the first groove section and supported on the annular step surface, and the guide portion is disposed in the second groove section.

Based on the above considerations, this application provides a battery cell, a manufacturing method of a housing assembly, a battery, and an electric apparatus. By providing the annular step surface configured to abut against the body portion, a matching area between the flange portion and the body portion can be increased, improving stability of the sealing member and the electrode terminal during assembly. By providing the first groove section, a dimension of the battery cell in the axial direction of the electrode terminal can be reduced, and the body portion in the first groove section can serve a limiting function to reduce the risk of the sealing member slipping out of the recessed portion during an assembly process. In this way, the connection effect between the sealing member and the electrode terminal can be improved.

The battery cell, the manufacturing method of the housing assembly, the battery, and the electric apparatus disclosed in the embodiments of this application can be used in an electric apparatus using a battery as a power source or in various energy storage systems using a battery as an energy storage element. The electric apparatus may be but is not limited to a mobile phone, a tablet computer, a notebook computer, an electric toy, an electric tool, an electric bicycle, an electric vehicle, a ship, or a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, an electric apparatus according to an embodiment of this application being a vehicle 1000a is used as an example for description of the following embodiments.

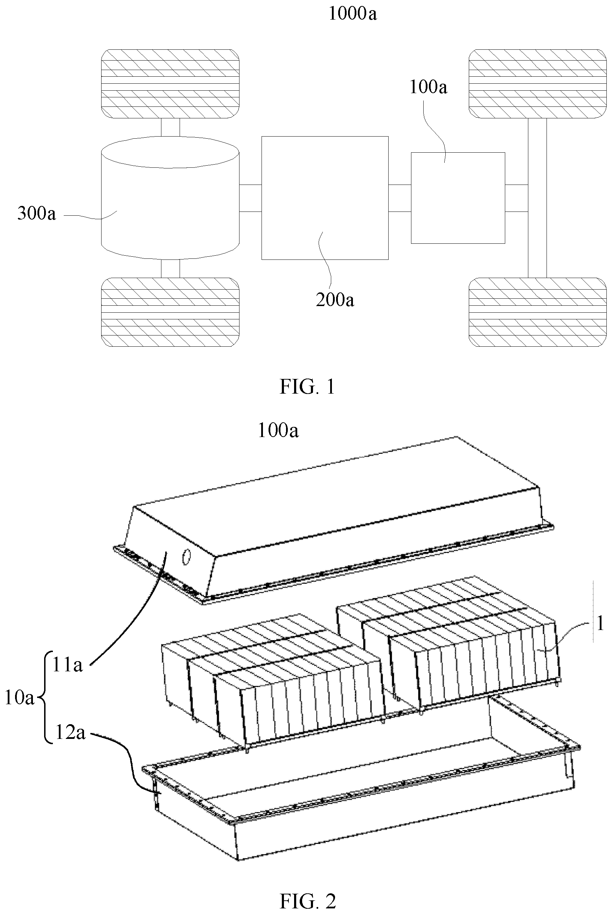

Referring to FIG. 1, the vehicle 1000a may be a fuel vehicle, a gas vehicle, or a new energy vehicle, where the new energy vehicle may be a battery electric vehicle, a hybrid electric, or an extended-range vehicle. A battery 100a is provided inside the vehicle 1000a, and the battery 100a can be disposed at a bottom, a front, or a rear of the vehicle 1000a. The battery 100a can be used for supplying power to the vehicle 1000a, for example, the battery 100a can serve as an operating power source for the vehicle 1000a. The vehicle 1000a may further include a controller 200a and a motor 300a, where the controller 200a is configured to control the battery 100a to supply power to the motor 300a, for example, for operational power demands during starting, navigation, and driving of the vehicle 1000a.

In some embodiments of this application, the battery 100a can not only serve as an operating power source for the vehicle 1000a but also as a driving power source for the vehicle 1000a, replacing or partially replacing fuel or natural gas to provide driving power for the vehicle 1000a.

In some embodiments, the battery 100a can be an energy storage apparatus. The energy storage apparatus includes an energy storage container, an energy storage electric cabinet, and the like.

The battery 100a mentioned in the embodiments of this application refers to a single physical module including one or more battery cells 1 to provide higher voltage and capacity.

In the embodiments of this application, the battery cell 1 may be a secondary battery, where the secondary battery refers to a battery cell that can be charged after the battery cell is discharged to activate active materials for continued use. Each battery cell 1 may alternatively be a primary battery.

The battery cell 1 includes but is not limited to a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead-acid battery. The battery cell 1 may be cylindrical, flat, cuboid, or in other shapes.

In some embodiments, the battery 100a may be a battery module, and when there are multiple battery cells 1, the multiple battery cells 1 are arranged and fixed to form a battery module.

In some embodiments, referring to FIG. 2, the battery 100a may be a battery pack, where the battery pack includes a box 10a and a battery cell 1, and the battery cell 1 or battery module is accommodated in the box 10a.

In some embodiments, the box 10a can serve as a part of a chassis structure of the vehicle 1000a. For example, a portion of the box 10a can become at least a part of a floor of the vehicle 1000a, or a portion of the box 10a can become at least a part of cross beams and longitudinal beams of the vehicle 1000a.

Referring to FIG. 2, the battery 100a includes a box 10a and a battery cell 1, where the battery cell 1 is accommodated in the box 10a. The box 10a is configured to provide an accommodation space for the battery cell 1, and the box 10a can adopt various structures. In some embodiments, the box 10a may include a first portion 11a and a second portion 12a, where the first portion 11a and the second portion 12a fit each other, and the first portion 11a and the second portion 12a together define an accommodation space for accommodating the battery cell 1. The second portion 12a may be a hollow structure with an opening formed at an end, the first portion 11a may be a plate-like structure, and the first portion 11a covers an opening side of the second portion 12a, so that the first portion 11a and the second portion 12a together define the accommodation space; the first portion 11a and the second portion 12a may alternatively each be a hollow structure with an opening formed on a side, where an opening side of the first portion 11a covers an opening side of the second portion 12a. Certainly, the box 10a formed by the first portion 11a and the second portion 12a may be in various shapes, such as a cylinder and a cuboid.

In the battery 100a, there may be multiple battery cells 1, and the multiple battery cells 1 can be connected in series, parallel, or series-parallel, where being connected in series-parallel means a combination of both series and parallel connections among the multiple battery cells 1. The multiple battery cells 1 can be directly connected in series, parallel, or series-parallel, and then an entirety formed by the multiple battery cells 1 is accommodated in the box 10a; certainly, the battery 100a may alternatively be formed by first connecting multiple battery cells 1 in series, parallel, or series-parallel to form a battery module, and then connecting multiple battery modules in series, parallel, or series-parallel to form an entirety that is accommodated in the box 10a. The battery 100a may further include other structures, for example, the battery 100a may further include a busbar component configured to achieve electrical connection between the multiple battery cells 1.

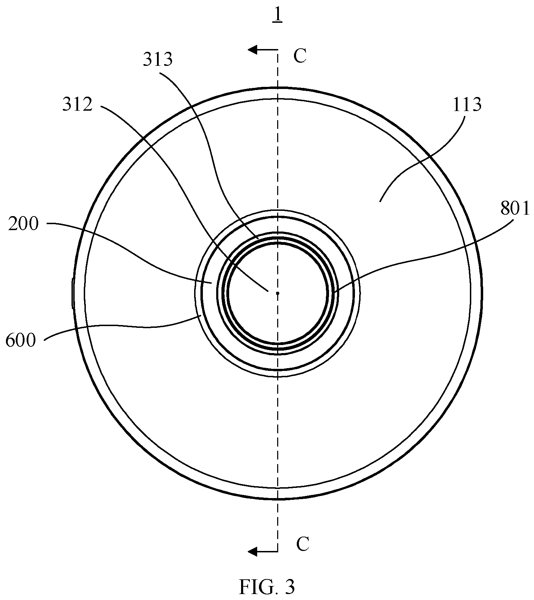

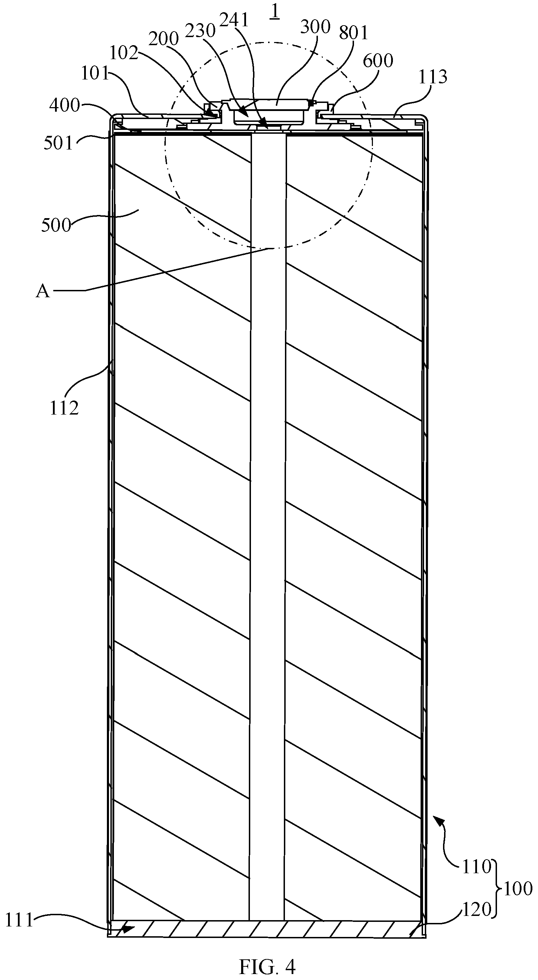

Referring to FIG. 3 and FIG. 4, the battery cell 1 refers to a smallest unit constituting the battery. In this embodiment, a cylindrical battery cell 1 is taken as an example for description. As shown in FIG. 3 and FIG. 4, the battery cell 1 includes a shell 100, an electrode assembly 500, and other functional components.

In some embodiments, the shell 100 is configured to seal the electrode assembly 500, an electrolyte, and other components. The shell 100 may be a steel shell, an aluminum shell, a plastic shell (such as polypropylene), a composite metal shell (such as a copper-aluminum composite shell), an aluminum-plastic film, or the like.

The shell 100 may include an end cap 120 and a housing 110. The end cap 120 refers to a component that covers an opening of the housing 110 to isolate an internal environment of the battery cell 1 from an external environment. A shape of the end cap 120 is not limited and may be adapted to a shape of the housing 110 to fit the housing 110. Optionally, the end cap 120 can be made of a material with certain hardness and strength (such as an aluminum alloy), so that the end cap 120 is less likely to deform when subjected to extrusion or collision, enabling the battery cell 1 to have higher structural strength and improved safety performance. Functional components such as an electrode terminal 200 can be provided on the end cap 120. The electrode terminal 200 can be configured to be electrically connected to the electrode assembly 500 for outputting or inputting electrical energy of the battery cell 1. In some embodiments, the end cap 120 may further be provided with a pressure relief mechanism configured to release internal pressure when an internal pressure or temperature of the battery cell 1 reaches a threshold. The material of the end cap 120 may alternatively be various, for example, including but not limited to copper, iron, aluminum, stainless steel, aluminum alloy, and plastic. In some embodiments, an insulation part may further be provided at an inner side of the end cap 120. The insulation part may be configured to isolate an electrically connected component in the housing 110 from the end cap 120 to reduce the risk of short circuit. For example, the insulation part may be made of plastic, rubber, or the like.

The housing 110 is an assembly configured to form an internal environment of the battery cell 1 by fitting with an end cap 120, where the formed internal environment may be used to accommodate the electrode assembly 500, the electrolyte, and other components. The housing 110 and the end cap 120 can be independent components, an opening 111 can be provided on the housing 110, and the end cap 120 covers the opening 111 at the opening 111 to form the internal environment of the battery cell 1. Without limitation, the end cap 120 and the housing 110 can alternatively be integrated, specifically, the end cap 120 and the housing 110 can form a common connection surface before other components are placed into the housing, and when an interior of the housing 110 needs to be sealed, the end cap 120 covers the housing 110. The housing 110 may be of various shapes and sizes, such as a cuboid shape, a cylindrical shape, and a hexagonal prism shape. Specifically, a shape of the housing 110 can be determined based on a specific shape and size of the electrode assembly 500. The material of the housing 110 may be various, for example, including but not limited to copper, iron, aluminum, stainless steel, aluminum alloy, and plastic.

The electrode assembly 500 is a component in the battery cell 1 where an electrochemical reaction occurs. The housing 110 can contain one or more electrode assemblies 500.

In some embodiments, the electrode assembly 500 includes a positive electrode, a negative electrode, and a separator. During charging and discharging of the battery cell, active ions (such as lithium ions) intercalate and deintercalate back and forth between the positive electrode and the negative electrode. The separator is disposed between the positive electrode and the negative electrode to prevent short circuit of the positive electrode and the negative electrode and to allow the active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector includes two opposite surfaces in a thickness direction of the positive electrode current collector, and the positive electrode active material is disposed on either or both of the two opposite surfaces of the positive electrode current collector.

In an example, the positive electrode current collector may be a metal foil or a composite current collector. For example, as the metal foil, the positive electrode current collector may use silver surface-treated aluminum or stainless steel, stainless steel, copper, aluminum, nickel, baked carbon, carbon, nickel, or titanium. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, polyethylene, or the like).

In an example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries. These positive electrode active materials may be used alone or in combination of two or more. Examples of the lithium-containing phosphate may include but are not limited to at least one of lithium iron phosphate (for example, $LiFePO_4$ (also abbreviated as LFP)), a composite material of lithium iron phosphate and carbon, lithium manganese phosphate (for example, $LiMnPO_4$), a composite material of lithium manganese phosphate and carbon, lithium iron manganese phosphate, or a composite material of lithium iron manganese phosphate and carbon. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ or $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (also abbreviated as NCM333),

$LiNi_{0.5}Co_{0.2}Mn_{0.3}O_2$ (also abbreviated as NCM523), $LiNi_{0.5}Co_{0.25}Mn_{0.25}O_2$ (also abbreviated as NCM211), $Li-Ni_{0.6}Co_{0.2}Mn_{0.2}O_2$ (also abbreviated as NCM622), or $LiNi_{0.8}Co_{0.1}Mn_{0.1}O_2$ (also abbreviated as NCM811)), lithium nickel cobalt aluminum oxide (for example, $LiNi_{0.85}Co_{0.15}Al_{0.05}O_2$), and modified compounds thereof.

In some embodiments, the negative electrode may be a negative electrode plate, and the negative electrode plate may include a negative electrode current collector.

In an example, the negative electrode current collector can adopt a metal foil, a foamed metal, or a composite current collector. For example, as the metal foil, the negative electrode current collector may use silver surface-treated aluminum or stainless steel, stainless steel, copper, aluminum, nickel, baked carbon, carbon, nickel, or titanium. The foamed metal may be foamed nickel, foamed copper, foamed aluminum, foamed alloy, foamed carbon, or the like. The composite current collector may include a polymer material substrate and a metal layer. The composite current collector can be formed by forming a metal material (copper, copper alloy, nickel, nickel alloy, titanium, titanium alloy, silver, silver alloy, or the like) on a polymer material substrate (such as a matrix of polypropylene, polyethylene terephthalate, polybutylene terephthalate, polystyrene, polyethylene, or the like).

In an example, the negative electrode plate may include a negative electrode current collector and a negative electrode active material disposed on at least one surface of the negative electrode current collector.

In an example, the negative electrode current collector has two opposite surfaces in a thickness direction of the negative electrode current collector, and the negative electrode active material is disposed on either or both of the two opposite surfaces of the negative electrode current collector.

In an example, the negative electrode active material can adopt well-known negative electrode active materials used for battery cells in the art. In an example, the negative electrode active material may include at least one of the following materials: artificial graphite, natural graphite, soft carbon, hard carbon, silicon-based material, tin-based material, and lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and other conventional materials that can be used as negative electrode active materials for batteries can also be used. These negative electrode active materials can be used alone or in a combination of two or more.

In some embodiments, a material of the positive electrode current collector may be aluminum, and a material of the negative electrode current collector may be copper.

In some embodiments, the electrode assembly 500 further includes a separator, where the separator is disposed between the positive electrode and the negative electrode.

In some embodiments, the separator is an isolating film. The isolating film is not limited to any particular type in this application, and may be any well-known porous isolating film with good chemical stability and mechanical stability.

In an example, major materials of the isolating film may be selected from at least one of glass fiber, non-woven fabric, polyethylene, polypropylene, polyvinylidene fluoride, or ceramics. The isolating film may be a single-layer film or a multi-layer composite film, and is not particularly limited. When the isolating film is a multi-layer composite film, materials of the layers may be the same or different, without particular limitation. The separator may be an independent component located between the positive electrode and the negative electrode, or may be attached to surfaces of the positive electrode and the negative electrode.

In some embodiments, the separator is a solid-state electrolyte. The solid-state electrolyte is disposed between the positive electrode and the negative electrode, and plays the roles of transporting ions and isolating the positive electrode and the negative electrode.

In some embodiments, the battery cell further includes an electrolyte, where the electrolyte plays a role of conducting ions between the positive electrode and the negative electrode. This application imposes no specific limitation on a type of the electrolyte, and the electrolyte can be selected according to needs. The electrolyte may be in a liquid state, a gel state, or a solid state.

The liquid-state electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro-bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone. The solvent may alternatively be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

EP 4 621 983 A1

The gel-state electrolyte includes as a skeleton network with a polymer as the electrolyte and an ionic liquid-lithium salt.

The solid-state electrolyte includes a polymer solid-state electrolyte, an inorganic solid-state electrolyte, and a composite solid-state electrolyte.

In an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid-state electrolyte can be one or more of an oxide solid electrolyte (crystalline perovskite, sodium superionic conductor, garnet, amorphous LiPON film), a sulfide solid electrolyte (crystalline lithium superionic conductor (lithium germanium phosphorus sulfide, argyrodite), amorphous sulfide), a halide solid electrolyte, a nitride solid electrolyte, and a hydride solid electrolyte.

In an example, the composite solid-state electrolyte is formed by adding an inorganic solid-state electrolyte filler to a polymer solid electrolyte.

In some embodiments, the electrode assembly 500 is a wound structure. The positive electrode plate and the negative electrode plate are wound into a wound structure.

In some embodiments, the electrode assembly 500 is provided with a tab 501, where the tab can conduct current out of the electrode assembly 500. The tab includes a positive electrode tab and a negative electrode tab. The positive electrode tab and the negative electrode tab can be located together at one end of a body portion or separately at two ends of the body portion. During charging and discharging of the battery 100a, a positive electrode active substance and a negative electrode active substance react with the electrolyte, and the tab 501 is connected to an electrode terminal to form a current loop.

According to some embodiments of this application, as shown in FIG. 3 to FIG. 5, the battery cell 1 described in the embodiments of the battery cell 1 of this application includes a shell 100, an electrode terminal 200, and a sealing member 300. The shell 100 includes a wall portion 101, where the wall portion 101 is provided with a lead-out hole 102. The electrode terminal 200 includes an insertion portion 210 and a flange portion 220 connected to each other along an axial direction of the electrode terminal 200, where the insertion portion 210 is disposed in the lead-out hole 102, the flange portion 220 is located on a side of the insertion portion 210 away from an interior of the shell 100, and in a radial direction of the electrode terminal 200, the flange portion 220 at least partially extends beyond the insertion portion 210.

The axial direction of the electrode terminal 200 refers to a direction of spacing between an end of the electrode terminal 200 facing the interior of the shell 100 and an end facing away from the interior of the shell 100, while the radial direction of the electrode terminal 200 refers to a direction perpendicular to the axial direction of the electrode terminal 200. Unless otherwise specified, the axial and radial directions mentioned below refer to the axial direction and the radial direction of the electrode terminal 200.

One end of the electrode terminal 200 is disposed facing the interior of the shell 100 and can be configured to be electrically connected to the electrode assembly 500 disposed in the shell 100. The other end of the electrode terminal 200 is disposed facing an exterior of the shell 100 and can be connected to the outside, thereby enabling charging and discharging of the electrode assembly 500, for example, the other end of the electrode terminal 200 can be formed with the flange portion 220, where the flange portion 220 is connected to the outside through the sealing member 300. By disposing the insertion portion 210 in the lead-out hole 102, the electrode terminal 200 can be mounted to the shell 100.

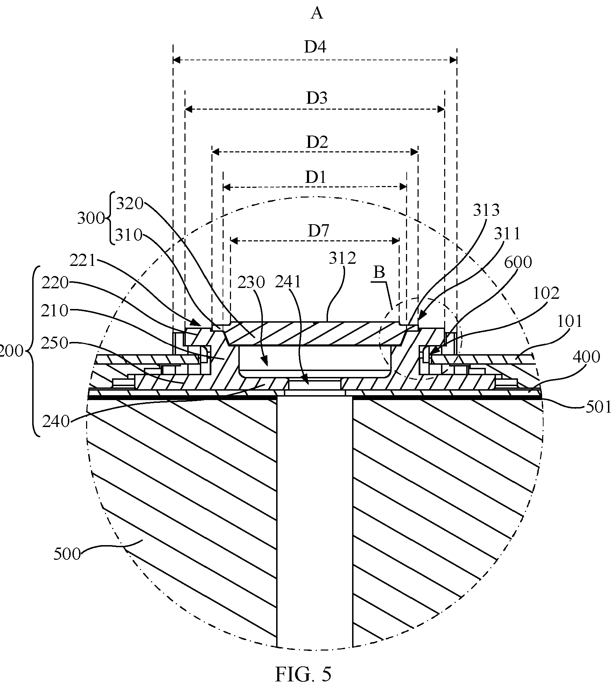

As shown in FIG. 5 to FIG. 7, in the radial direction of the electrode terminal 200, the flange portion 220 at least partially extending beyond the insertion portion 210 means that when an outer end surface 221 of the flange portion 220 is projected along the axial direction toward the insertion portion 210, the outer end surface 221 of the flange portion 220 is at least partially located outside an outer end surface of the insertion portion 210. In other words, a radial dimension D3 of at least part of the outer end surface 221 of the flange portion 220 is larger than a radial dimension D8 of an outer peripheral surface of the insertion portion 210. Such an arrangement enables the flange portion 220 to overlap with the wall portion 101 at a periphery of the lead-out hole 102, facilitating a sealed connection between the electrode terminal 200 and the wall portion 101.

The electrode terminal 200 has a groove portion 230 disposed along the axial direction, where the groove portion 230 includes a first groove section 231 and a second groove section 232, the first groove section 231 is located at an end of the second groove section 232 facing away from the interior of the shell 100, the first groove section 231 is located in the flange portion 220, the second groove section 232 is at least partially located in the flange portion 220, and a radial dimension D5 of the first groove section 231 is larger than a radial dimension D6 of the second groove section 232, thereby forming an annular step surface 233 at a junction of the first groove section 231 and the second groove section 232. The sealing member 300 is configured to seal the groove portion 230, where the sealing member 300 includes a body portion 310 and a guide portion 320, the body portion 310 is disposed in the first groove section 231 and supported on the annular step surface 233, the guide portion 320 is disposed in the second groove section 232, and the sealing member 300 is fixedly connected to the electrode terminal 200.

The sealing member 300 is configured to seal the groove portion 230, and the sealing member 300 can be configured to mitigate leakage of an electrolyte inside the battery cell 1.

The annular step surface 233 can be configured to abut against the body portion 310. The annular step surface 233 may be a flat surface and parallel to a surface of the body portion 310 supported on the annular step surface 233. Since the radial dimension D5 of the first groove section 231 is larger, a matching area between the body portion 310 of the sealing member 300 and the electrode terminal 200 can be increased. In addition, since the radial dimension D6 of the second groove section 232 is smaller, the damage to the electrode terminal 200 due to insufficient connection strength between the flange portion 220 and the insertion portion 210 can be reduced, thereby improving a connection effect between the sealing member 300 and the electrode terminal 200.

Further, when the flange portion 220 is fixedly connected to the body portion 310 at the annular step surface 233, by providing the annular step surface 233 to increase a matching area when the flange portion 220 abuts against the body portion 310, a connection area between the flange portion 220 and the body portion 310 can be increased, enhancing stability of connection between the sealing member 300 and the electrode terminal 200.

Further, by providing the first groove section 231, a dimension of the battery cell 1 in the axial direction can be reduced. Specifically, by disposing the body portion 310 in the first groove section 231, the body portion 310 and the flange portion 220 can at least partially overlap in the axial direction, thereby reducing the dimension of the battery cell 1 in the axial direction. In addition, the body portion 310 in the first groove section 231 can serve a limiting function to reduce the risk of the sealing member 300 slipping out of the groove portion 230 during an assembly process.

By disposing the guide portion 320 in the second groove section 232, the guide portion 320 can seal the groove portion 230 in the second groove section 232, and the guide portion 320 in the second groove section 232 can serve a limiting function to reduce the risk of the sealing member 300 slipping out of the groove portion 230 during the assembly process.

The battery cell 1 is electrically connected to the outside through the sealing member 300. By providing the sealing member 300 fixedly connected to the electrode terminal 200, an electrical conduction path can be formed between the electrode assembly 500, the electrode terminal 200, and the sealing member 300. The electrode assembly 500 can be electrically connected to the outside sequentially through the electrode terminal 200 and the sealing member 300. For example, the battery cell 1 can be connected to a busbar (busbar) through the sealing member 300. The busbar (busbar) is a connection bar with a multi-layer composite structure, capable of connecting multiple battery cells 1 in series or parallel through welding or bolting.

Further, the sealing member 300 can be electrically connected to the outside through the body portion 310.

Corresponding to the radial dimension D5 of the first groove section 231 being larger than the radial dimension D6 of the second groove section 232, the body portion 310 at least partially extends beyond the guide portion 320 in the radial direction. An outer end surface of the body portion 310 can be at an outer surface of the battery cell 1, thereby enabling electrical connection to the outside. By providing the body portion 310 to at least partially extend beyond the guide portion 320 in the radial direction of the electrode terminal 200, an area of the outer end surface of the body portion 310 can be increased, facilitating operations for electrically connecting the body portion 310 to the outside.

Optionally, the sealing member 300 is an aluminum nail, and the electrode terminal 200 is a copper riveted structure.

Optionally, the electrode terminal 200 may include a limiting flange 250, where the limiting flange 250 is located inside the shell 100 to prevent the electrode terminal 200 from detaching from the shell 100.

According to some embodiments of this application, optionally, as shown in FIG. 5 to FIG. 7, an outer end surface of the body portion 310 facing away from the interior of the shell 100 protrudes beyond an outer end surface of the flange portion 220 facing away from the interior of the shell 100, and the body portion 310 is welded and fixed to the flange portion 220.

In the axial direction, by setting the outer end surface of the body portion 310 facing away from the interior of the shell 100 to protrude beyond the outer end surface of the flange portion 220 facing away from the interior of the shell 100, absorption of welding energy by the outer end surface of the flange portion 220 facing away from the interior of the shell 100 can be reduced, enabling the welding energy to more easily act directly on the body portion 310, improving a welding connection effect between the body portion 310 and the flange portion 220, and reducing an adverse effect of the welding energy on the outer end surface of the flange portion 220 facing away from the interior of the shell 100.

In the radial direction of the electrode terminal 200, the outer end surface of the body portion 310 facing away from the interior of the shell 100 protruding beyond the outer end surface of the flange portion 220 facing away from the interior of the shell 100 can mean that the body portion 310 overlaps with the flange portion 220, facilitating a welding connection between the body portion 310 and the flange portion 220.

During an assembly process of the battery cell 1, under a condition that the sealing member 300 has been inserted into the groove portion 230, a welding operation can be performed along the axial direction from a side of the outer end surface of the body portion 310, where the welding process can penetrate the body portion 310 and extend into the flange portion 220, forming a melt that penetrates the body portion 310 and extends into the flange portion 220 along the axial direction; and the solidified melt can achieve connection between the flange portion 220 and the body portion 310.

By providing the body portion 310 to at least partially extend beyond the guide portion 320 in the radial direction, an area of the outer end surface of the body portion 310 can be increased, facilitating operations for electrically connecting the body portion 310 to the flange portion 220.

According to some embodiments of this application, optionally, as shown in FIG. 5 to FIG. 7, the battery cell 1 includes an insulating member 600, where the insulating member 600 surrounds a periphery of the electrode terminal 200 and is located between the electrode terminal 200 and the wall portion 101; and the electrode terminal 200, the sealing member 300, and the insulating member 600 are arranged such that welding energy reflected from an outer peripheral surface 311 of a protruding portion of the body portion 310 relative to the flange portion 220 and transmitted toward the insulating member 600 is blocked by the outer end surface 221 of the flange portion 220.

The insulating member 600 can form insulation between the electrode terminal 200 and the wall portion 101, thereby restricting current from flowing directly from the electrode terminal 200 to the wall portion 101 or directly from the wall portion 101 to the electrode terminal 200.

During assembling of the sealing member 300, energy from the welding process acts on the outer peripheral surface 311 of the protruding portion of the body portion 310 relative to the flange portion 220, thereby melting the body portion 310 and the flange portion 220. The outer peripheral surface 311 of the protruding portion of the body portion 310 relative to the flange portion 220 reflects part of the welding energy, posing the risk of the insulating member 600 being melted by the welding energy. A welding energy source can also emit energy outward from the outer peripheral surface 311 of the protruding portion of the body portion 310 relative to the flange portion 220, posing the risk of the insulating member 600 being melted by the welding energy. By arranging dimensional and positional relationships of the electrode terminal 200, the sealing member 300, and the insulating member 600, energy transmitted from the outer peripheral surface 311 of the protruding portion of the body portion 310 relative to the flange portion 220 toward the insulating member 600 can be blocked by the outer end surface 221 of the flange portion 220, thereby reducing an adverse effect of the welding energy on the insulating member 600.

Optionally, when the insertion portion 210 is disposed in the lead-out hole 102, a gap exists between the insertion portion 210 and the lead-out hole 102, and the insulating member 600 can be disposed in the gap to fill the gap.

Further, the insulating member 600 abuts against the wall portion 101 and the flange portion 220 at two ends in the axial direction, respectively.

Optionally, the insulating member 600 can also serve a sealing function, restricting leakage of the electrolyte from the gap.

Optionally, the insulating member 600 can be made of an insulating plastic material.

According to some embodiments of this application, optionally, as shown in FIG. 5 to FIG. 7, the outer end surface 221 of the flange portion 220 protrudes beyond an outer end surface 601 of the insulating member 600 facing away from the interior of the shell 100, and satisfies the following relationship:

$$\arctan(H5/((D4-D3)/2))>\arctan((H3-H2)/((D3-D2)/2)),$$

where H5 is a protruding height of the outer end surface 221 of the flange portion 220 relative to the outer end surface of the insulating member 600, D4 is a radial dimension of the outer end surface of the insulating member 600, D3 is a radial dimension of the outer end surface 221 of the flange portion 220, H3 is an axial thickness of the body portion 310 located in the first groove section 231, H2 is an axial depth of the first groove section 231, and D2 is a radial dimension of the outer end surface of the body portion 310.

The value of arctan(H5/((D4-D3)/2)) equals an angle $\alpha$, and the value of arctan(H5/((D4-D3)/2)) equals an angle $\beta$, and since the arctangent function is a directly proportional function, the value of the angle $\alpha$ is greater than the value of the angle $\beta$. By reasonably setting dimensional parameters of related components, energy transmitted from the outer peripheral surface 311 of the protruding portion of the body portion 310 relative to the flange portion 220 toward the insulating member 600 can be blocked by the flange portion 220, thereby reducing the adverse effect of the welding energy on the insulating member 600.

According to some embodiments of this application, optionally, as shown in FIG. 5 to FIG. 7, in the axial direction, a protruding height of the outer end surface of the body portion 310 relative to the outer end surface 221 of the flange portion 220 is greater than or equal to 0.1 mm.

In other words, the outer end surface of the body portion 310 protrudes beyond the outer end surface 221 of the flange portion 220, and a height difference between the outer end surface of the body portion 310 and the outer end surface 221 of the flange portion 220 is greater than or equal to 0.1 mm, that is, H3-H2≥0.1 mm. For example, H3-H2 can be set to 0.1 mm, 0.2 mm, 0.3 mm, 0.5 mm, or 1 mm, or the like.

In the axial direction, by setting the protruding height of the outer end surface of the body portion 310 relative to the outer end surface 221 of the flange portion 220 to be greater than or equal to 0.1 mm, the welding energy can more easily act directly on the body portion 310. Such an arrangement can both enhance a welding effect between the body portion 310 and the flange portion 220 and reduce an adverse effect of the welding energy on the outer end surface of the flange portion 220 facing away from the interior of the shell 100.

According to some embodiments of this application, optionally, as shown in FIG. 5 to FIG. 7, in the axial direction, an axial thickness H3 of the body portion 310 located in the first groove section 231 is less than or equal to 0.5 times a difference between an axial thickness H1 of the flange portion 220 and an axial depth H2 of the first groove section 231, and the body portion 310 is welded and fixed to the flange portion 220. That is, H3≤0.5 (H1-H2).

By setting H3≤0.5 (H1-H2), welding strength between the body portion 310 and the flange portion 220 can be improved.

Specifically, during an assembly process of the battery cell 1, under a condition that the sealing member 300 has been inserted into the groove portion 230, a welding operation can be performed along the axial direction from a side of the outer end surface of the body portion 310, where the welding process can form a melt that penetrates the body portion 310 and extends into the flange portion 220 along the axial direction, and the solidified melt can achieve connection between the flange portion 220 and the body portion 310. The difference between the axial thickness H1 of the flange portion 220 and the axial depth H2 of the first groove section 231 is a thickness of the flange portion 220 along a penetration direction of the melt. However, if the melt completely penetrates the flange portion 220, weld-through defects of the flange portion 220 may occur. Weld-through defects of the flange portion 220 can manifest as the melt completely penetrating the flange portion 220 and further flowing out from the flange portion 220, causing the damage to other components of the battery cell 1, for example, potentially causing the damage to the insulating member 600 by the melt, affecting insulation and sealing properties, or for example, causing erroneous welding between the flange portion 220 and the wall portion 101, resulting in a short circuit.

By setting the axial thickness H3 of the body portion 310 located in the first groove section 231 in the axial direction to be less than or equal to 0.5 times a thickness of the flange portion 220 available for penetration by the melt, the melt in the welding process can more easily penetrate the body portion 310 and can be stopped in time when further extending into the flange portion 220, facilitating control of the welding process, reducing the risk of weld-through of the flange portion 220, and mitigating adverse effects caused by weld-through of the flange portion 220.

According to some embodiments of this application, optionally, as shown in FIG. 5 to FIG. 7, an axial thickness H3 of the body portion 310 located in the first groove section 231 is greater than or equal to 0.3 mm, and an axial depth H2 of the first groove section 231 is greater than or equal to 0.2 mm. That is, H2≥0.2 mm, H3≥0.3 mm. For example, H2 can be set to 0.3 mm, 0.4 mm, 0.5 mm, 0.8 mm, or the like. For example, H3 can be set to 0.4 mm, 0.5 mm, 0.8 mm, 1 mm, or the like.

By setting the axial thickness H3 of the body portion 310 located in the first groove section 231 to be greater than or equal to 0.3 mm, a load-bearing capacity of the body portion 310 can be improved, enhancing connection strength when the body portion 310 is connected to the flange portion 220.

By setting the axial depth H2 of the first groove section 231 to be greater than or equal to 0.2 mm, on one hand, a dimension of overlap between the sealing member 300 and the groove portion 230 in the axial direction can be increased, thereby enhancing a limiting function of the groove portion 230 on the sealing member 300, and on the other hand, a dimension of the battery cell 1 in the axial direction can be reduced.

According to some embodiments of this application, optionally, as shown in FIG. 5 to FIG. 7, in the radial direction, a difference between a radial dimension D2 of the outer end surface of the body portion 310 and a radial dimension D1 of an inner ring edge of the annular step surface 233 is greater than or equal to 0.3 mm. That is, D2-D1≥0.3 mm. For example, D2-D1 can be set to 0.4 mm, 0.5 mm, 0.8 mm, 1 mm, or the like.

The body portion 310 is supported on the annular step surface 233. In the radial direction, the body portion 310 and the flange portion 220 can contact each other from the outer end surface of the body portion 310 to the inner ring edge of the annular step surface 233. In other words, a contact surface between the body portion 310 and the flange portion 220 is an annular shape with a width greater than or equal to 0.3 mm.

In the radial direction, by setting the difference between the radial dimension D2 of the outer end surface of the body portion 310 and the radial dimension D1 of the inner ring edge of the annular step surface 233 to be greater than or equal to 0.3 mm, the contact area between the body portion 310 and the flange portion 220 can be increased, thereby improving stability of support provided by the flange portion 220 to the body portion 310.

Further, when connecting the body portion 310 and the flange portion 220, such an arrangement facilitates a connection operation, increases a connection area, and enhances a connection effect, thereby improving connection stability between the body portion 310 and the flange portion 220.

According to some embodiments of this application, optionally, as shown in FIG. 5 to FIG. 7, the outer end surface of the body portion 310 facing away from the interior of the shell 100 includes a central region 312 and a welding region 313 surrounding the central region 312, where the central region 312 is configured to be connected to an external conductive component, and the welding region 313 is configured to be welded to the flange portion 220.

The welding process can be performed from a side of the outer end surface of the body portion 310. Accordingly, a melt produced by welding can be formed from a side of the body portion 310 facing away from the outer end surface 221 of the flange portion 220, penetrates the body portion 310, and further extends into the flange portion 220. After cooled and solidified, the melt produced by welding can form a weld mark 801, thereby connecting the flange portion 220 and the body portion 310.

The welding region 313 surrounds the central region 312, and accordingly, a welding trajectory when the body portion 310 is welded to the flange portion 220 can surround the central region 312, thereby forming the weld mark 801 located in the welding region 313 and surrounding the central region 312, enabling balanced connection between the body portion 310 and the flange portion 220, and enhancing connection stability.

According to some embodiments of this application, optionally, as shown in FIG. 5 to FIG. 7, the welding region 313 is recessed toward the interior of the shell 100 relative to the central region 312.

After the weld mark 801 is formed, the weld mark 801 may protrude beyond a material surface before welding. Specifically, the weld mark 801 can protrude beyond a surface of the welding region 313 before welding. By setting the welding region 313 to be recessed toward the interior of the shell 100 relative to the central region 312, the risk of the weld mark 801 protruding beyond the central region 312 and thus affecting connection between the central region 312 and an external conductive component can be reduced.

According to some embodiments of this application, optionally, as shown in FIG. 5 to FIG. 7, in the axial direction, a recess depth H4 of the welding region 313 relative to the central region 312 is greater than or equal to 0.1 mm. For example, H4 can be set to 0.15 mm, 0.2 mm, 0.3 mm, 0.5 mm, 0.8 mm, 1 mm, or the like.

By setting the recess depth H4 of the welding region 313 relative to the central region 312 to be greater than or equal to 0.1 mm, the risk of the weld mark 801 protruding beyond the central region 312 and thus affecting connection between the central region 312 and the external conductive component can be reduced.

According to some embodiments of this application, optionally, as shown in FIG. 4 and FIG. 5, in the radial direction, a radial dimension D7 of an inner ring edge of the welding region 313 is less than or equal to the radial dimension D1 of the inner ring edge of the annular step surface 233.

By setting the radial dimension D7 of the inner ring edge of the welding region 313 to be less than or equal to the radial dimension D1 of the inner ring edge of the annular step surface 233, an area of the welding region 313 can be expanded, facilitating welding operations and thereby contributing to improved welding strength.

On the other hand, in the radial direction, the body portion 310 and the flange portion 220 can contact each other from the outer end surface of the body portion 310 to the inner ring edge of the annular step surface 233. When the welding region 313 is projected along the axial direction toward the annular step surface 233, a projection of the welding region 313 can cover the contact surface between the body portion 310 and the flange portion 220. In some embodiments, after the melt penetrates the body portion 310 along the axial direction, a portion of the melt extends into the flange portion 220 from an outer side of the inner ring edge of the annular step surface 233, forming a welded connection between the flange portion 220 and the body portion 310 along the axial direction. Another portion of the melt extends into the guide portion 320 from an inner side of the inner ring edge of the annular step surface 233, forming a welded connection between the flange portion 220 and the guide portion 320 along the radial direction with the melt extending into the flange portion 220. In this way, a welding effect between the sealing member 300 and the electrode terminal 200 can be enhanced.

According to some embodiments of this application, optionally, as shown in FIG. 5 to FIG. 7, in the radial direction, the radial dimension D5 of the first groove section 231 is less than or equal to the radial dimension D8 of an outer peripheral surface of the insertion portion 210.

During a forming process of the first groove section 231 and the annular step surface 233, the flange portion 220 can be subjected to an axial force from an external forming device at the annular step surface 233. By setting the radial dimension D5 of the first groove section 231 to be less than or equal to the radial dimension D8 of the outer peripheral surface of the insertion portion 210 in the radial direction, when the annular step surface 233 is projected along the axial direction toward the insertion portion 210, a projection of the annular step surface 233 can fall within the insertion portion 210, and accordingly, a force received by the flange portion 220 at the annular step surface 233 can be transmitted along the axial direction into the insertion portion 210. In this way, the risk of the damage to the flange portion 220 due to the axial force can be reduced.

Additionally, optionally, the insulating member 600 is disposed on an outer periphery of the insertion portion 210 and on a side of the flange portion 220 close to the interior of the shell 100. Such an arrangement can reduce the risk of the damage to the insulating member 600.

Optionally, forming methods of the first groove section 231 and the annular step surface 233 include forming by stamping or forming by cutting.

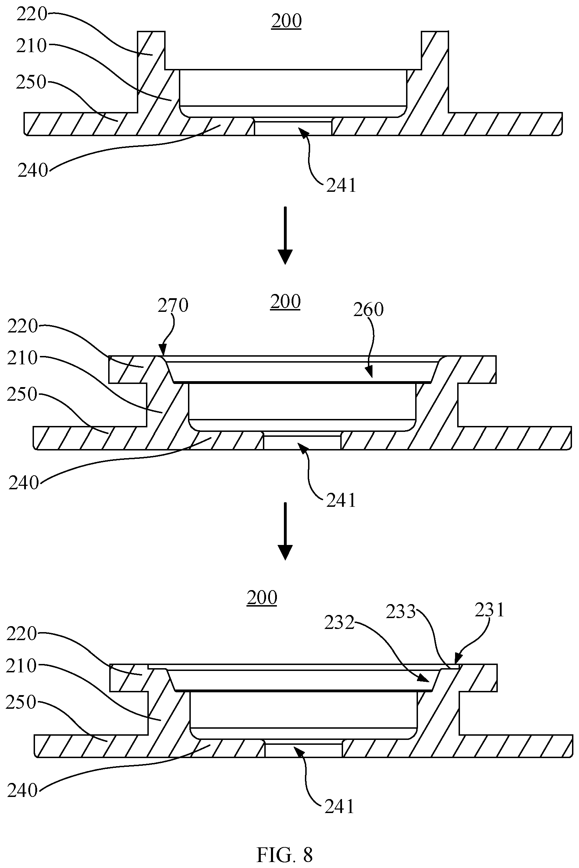

According to some embodiments of this application, optionally, as shown in FIG. 8, the flange portion 220 and the insertion portion 210 are integrally formed and bent relative to the insertion portion 210, and the first groove section 231 is formed by stamping.

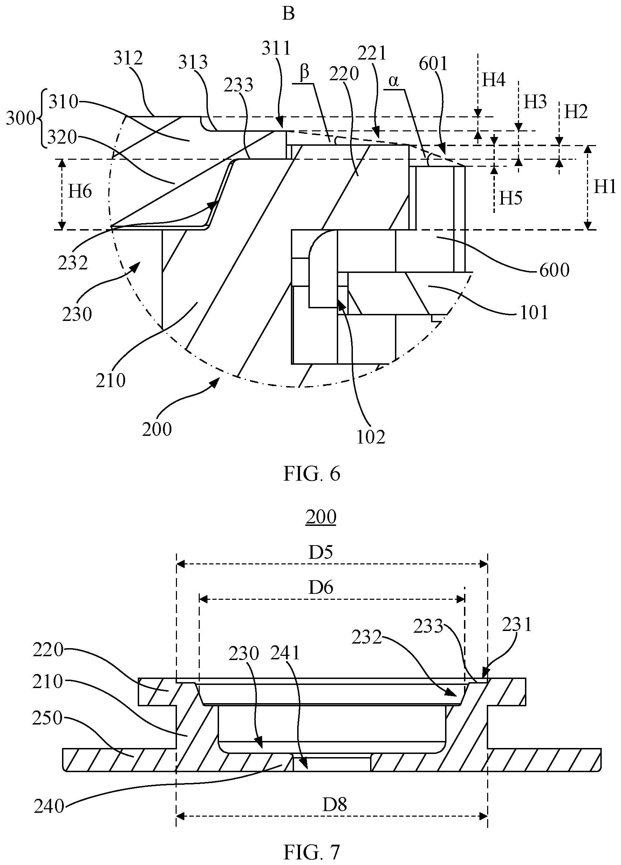

As shown in FIG. 6 and FIG. 8, during a forming process of the electrode terminal 200, a transition fillet 900 is formed after the flange portion 220 is bent relative to the insertion portion 210. When the flange portion 220 supports the body portion 310, the presence of the transition fillet 900 results in an excessively small contact area between the flange portion 220 and the body portion 310, making it difficult for the flange portion 220 to effectively support the body portion 310.

A stamping method can be used to reduce the transition fillet 900 between the flange portion 220 and the insertion portion 210, increasing the contact area between the flange portion 220 and the body portion 310, and facilitating the support by the flange portion 220 for the body portion 310.

Compared to forming by cutting, forming by stamping offers higher production efficiency, better stability in forming surface quality, and less waste generation, and is more suitable for large-scale production.

According to some embodiments of this application, optionally, as shown in FIG. 4 and FIG. 5, the flange portion 220 and the insertion portion 210 are integrally formed, and the electrode terminal 200 includes a sealing portion 240 integrally formed with the insertion portion 210, where the sealing portion 240 seals an end of the insertion portion 210 facing the interior of the shell 100 to form the groove portion 230.

A side of the sealing portion 240 facing away from the interior of the shell 100 can constitute a bottom wall of the groove portion 230. By providing the sealing portion 240, a manufacturing process of the electrode terminal 200 can be simplified.

According to some embodiments of this application, optionally, as shown in FIG. 4 and FIG. 5, the groove portion 230 is configured for injection of an electrolyte into the shell 100.

During a production process of the battery cell 1, the groove portion 230 can communicate with the interior of the shell 100, allowing the electrolyte to be injected into the shell 100 through the groove portion 230. By providing the groove portion 230, after the electrode terminal 200 is assembled and connected to the shell 100, the groove portion 230 can be configured for injection of the electrolyte, followed by sealing with the sealing member 300, which can simplify structural complexity of the battery cell 1 and improve the assembly efficiency of the battery cell 1.

According to some embodiments of this application, optionally, as shown in FIG. 4 and FIG. 5, the sealing portion 240 is provided with an electrolyte injection hole 241, where the electrolyte injection hole 241 implements a communication between the interior of the shell 100 and the groove portion 230.

Further, two ends of the electrolyte injection hole 241 along the axial direction can respectively communicate with the groove portion 230 and the interior of the shell 100.

During electrolyte injection, the electrolyte can sequentially flow through the groove portion 230 and the electrolyte injection hole 241 and then enter the shell 100. Providing the electrolyte injection hole 241 facilitates sealing after the electrolyte injection is completed. The sealing portion 240 is thinner than the insertion portion 210. By providing the electrolyte injection hole 241 in the sealing portion 240, formation of the electrolyte injection hole 241 is facilitated, and injection of the electrolyte is facilitated.

Optionally, the battery cell 1 may include a sealing plug. The sealing plug can be configured to seal the electrolyte injection hole 241 after the electrolyte injection is completed. Further, the sealing plug is an elastic polymer material, such as silicone and rubber.

According to some embodiments of this application, optionally, as shown in FIG. 4 and FIG. 5, the battery cell 1 further includes a current collector plate 400 and an electrode assembly 500 disposed inside the shell 100, where the current collector plate 400 is configured to connect a tab 501 of the electrode assembly 500 and the electrode terminal 200, and a side of the sealing portion 240 facing away from the groove portion 230 is welded to the current collector plate 400.

The current collector plate 400 can be disposed between the electrode terminal 200 and the electrode assembly 500, serving a role of forming an electrical conduction path between the electrode terminal 200 and the electrode assembly 500. By providing the current collector plate 400, electrical connection between the electrode terminal 200 and the electrode assembly 500 is facilitated. Utilizing a relatively thin thickness of the sealing portion 240 for welding to the current collector plate 400 enables electrical connection between the electrode terminal 200 and the current collector plate 400 from a side of the electrode terminal 200 facing away from the current collector plate 400.

According to some embodiments of this application, optionally, as shown in FIG. 4 and FIG. 5, the battery cell 1 further includes an electrode assembly 500, the shell 100 includes a housing 110 and an end cap 120, an end of the housing 110 is provided with an opening 111, the end cap 120 covers the opening 111, the housing 110 includes a sidewall 112 and an end wall 113, the sidewall 112 surrounds an outer side of the electrode assembly 500, the end wall 113 is disposed opposite the opening 111, and the wall portion 101 is the end cap 120 or the end wall 113.

In the above embodiments, the wall portion 101 is the end wall 113. In other embodiments, the wall portion 101 may alternatively be the end cap 120.

Since the end cap 120 or the end wall 113 is flatter than the sidewall 112, providing the electrode terminal 200 and the sealing member 300 on the end cap 120 or the end wall 113 can improve the assembly efficiency of the battery cell 1.

According to some embodiments of this application, optionally, as shown in FIG. 6, the guide portion 320 and the second groove section 232 are each configured in a frustum shape with a cross-section gradually decreasing in a direction toward the interior of the shell 100.

By configuring the guide portion 320 and the second groove section 232 each in the frustum shape with the cross-section gradually decreasing in the direction toward the interior of the shell 100, during an assembly process of the battery cell 1, the guide portion 320 can be guided into the second groove section 232, facilitating insertion of the sealing member 300 into the groove portion 230 and improving the assembly efficiency of the battery cell 1.

According to some embodiments of this application, optionally, as shown in FIG. 6 and FIG. 7, in the axial direction, an axial depth H2 of the first groove section 231 is less than an axial depth H6 of the second groove section 232.

The first groove section 231 and the second groove section 232 respectively limit the body portion 310 and the guide portion 320, and a sum of the axial depth H2 of the first groove section 231 and the axial depth H6 of the second groove section 232 can be considered a limiting length of the groove portion 230 on the sealing member 300. When a thickness of the flange portion 220 is constant, since the radial dimension D5 of the first groove section 231 is larger than the radial dimension D6 of the second groove section 232, a deeper axial depth H2 of the first groove section 231 indicates a smaller distance H1-H2 between the annular step surface 233 and a surface of the flange portion 220 close to the interior of the shell 100.

By setting the axial depth H2 of the first groove section 231 to be less than the axial depth H6 of the second groove section 232, the distance H1-H2 between the annular step surface 233 and the surface of the flange portion 220 close to the interior of the shell 100 can be reduced, thereby improving a load-bearing capacity at a junction between the flange portion 220 and the insertion portion 210.

According to some embodiments of this application, optionally, as shown in FIG. 3 to FIG. 8, the battery cell 1 includes a shell 100, an electrode terminal 200, and a sealing member 300. The shell 100 includes a wall portion 101, where the wall portion 101 is provided with a lead-out hole 102. The electrode terminal 200 includes an insertion portion 210 and a flange portion 220 connected to each other along an axial direction of the electrode terminal 200, where the insertion portion 210 is disposed in the lead-out hole 102, the flange portion 220 is located on a side of the insertion portion 210 away from an interior of the shell 100, and in a radial direction of the electrode terminal 200, the flange portion 220 at least partially extends beyond the insertion portion 210. The electrode terminal 200 has a groove portion 230 disposed along the axial direction, where the groove portion 230 includes a first groove section 231 and a second groove section 232, the first groove section 231 is located at an end of the second groove section 232 facing away from the interior of the shell 100, the first groove section 231 is located in the flange portion 220, the second groove section 232 is at least partially located in the flange portion 220, and a radial dimension D5 of the first groove section 231 is larger than a radial dimension D6 of the second groove section 232, thereby forming an annular step surface 233 at a junction of the first groove section 231 and the second groove section 232. The sealing member 300 is configured to seal the groove portion 230, where the sealing member 300 includes a body portion 310 and a guide portion 320, the body portion 310 is disposed in the first groove section 231 and supported on the annular step surface 233, the guide portion 320 is disposed in the second groove section 232, the sealing member 300 is fixedly connected to the electrode terminal 200, and the battery cell 1 is electrically connected to the outside through the sealing member 300. An outer end surface of the body portion 310 facing away from the interior of the shell 100 protrudes beyond an outer end surface of the flange portion 220 facing away from the interior of the shell 100, and the body portion 310 is welded and fixed to the flange portion 220. The battery cell 1 includes an insulating member 600, where the insulating member 600 surrounds a periphery of the electrode terminal 200 and is located between the electrode terminal 200 and the wall portion 101, and the electrode terminal 200, the sealing member 300; and the insulating member 600 are arranged such that welding energy reflected from an outer peripheral surface 311 of a protruding portion of the body portion 310 relative to the flange portion 220 and transmitted toward the insulating member 600 is blocked by the outer end surface 221 of the flange portion 220. The outer end surface 221 of the flange portion 220 protrudes beyond an outer end surface 601 of the insulating member 600 facing away from the interior of the shell 100, and satisfies the following relationship: arctan(H5/((D4-D3)/2))>arctan((H3-H2)/((D3-D2)/2)), where H5 is a protruding height of the outer end surface 221 of the flange portion 220 relative to the outer end surface of the insulating member 600, D4 is a radial dimension of the outer end surface of the insulating member 600, D3 is a radial dimension of the outer end surface 221 of the flange portion 220, H3 is an axial thickness of the body portion 310 located in the first groove section 231, H2 is an axial depth of the first groove section 231, and D2 is a radial dimension of the outer end surface of the body portion 310. In the axial direction, a protruding height of the outer end surface of the body portion 310 relative to the outer end surface 221 of the flange portion 220 is greater than or equal to 0.1 mm. In the axial direction, an axial thickness H3 of the body portion 310 located in the first groove section 231 is less than or equal to 0.5 times a difference between an axial thickness H1 of the flange portion 220 and an axial depth H2 of the first groove section 231, and the body portion 310 is welded and fixed to the flange portion 220. An axial thickness H3 of the body portion 310 located in the first groove section 231 is greater than or equal to 0.3 mm, and an axial depth H2 of the first groove section 231 is greater than or equal to 0.2 mm. In the radial direction, a difference between a radial dimension D2 of the outer end surface of the body portion 310 and a radial dimension D1 of an inner ring edge of the annular step surface 233 is greater than or equal to 0.3 mm. The outer end surface of the body portion 310 facing away from the interior of the shell 100 includes a central region 312 and a welding region 313 surrounding the central region 312, where the central region 312 is configured to be connected to an external conductive component, and the welding region 313 is configured to be welded to the flange portion 220. The welding region 313 is recessed toward the interior of the shell 100 relative to the central region 312. In the axial direction, a recess depth H4 of the welding region 313 relative to the central region 312 is greater than or equal to 0.1 mm. In the radial direction, a radial dimension D7 of an inner ring edge of the welding region 313 is less than or equal to a radial dimension D1 of an inner ring edge of the annular step surface 233. In the radial direction, a radial dimension D5 of the first groove section 231 is less than or equal to a radial dimension D8 of an outer peripheral surface of the insertion portion 210. The flange portion 220 and the insertion portion 210 are integrally formed and bent relative to the insertion portion 210, and the first groove section 231 is formed by stamping. The flange portion 220 and the insertion portion 210 are integrally formed, and the electrode terminal 200 includes a sealing portion 240 integrally formed with the insertion portion 210, where the sealing portion 240 seals an end of the insertion portion 210 facing the interior of the shell 100 to form the groove portion 230. The groove portion 230 is configured for injection of an electrolyte into the shell 100. The sealing portion 240 is provided with an electrolyte injection hole 241, where the electrolyte injection hole 241 implements a communication between the interior of the shell 100 and the groove portion 230. The battery cell 1 further includes a current collector plate 400 and an electrode assembly 500 disposed inside the shell 100, where the current collector plate 400 is configured to connect a tab 501 of the electrode assembly 500 and the electrode terminal 200, and a side of the sealing portion 240 facing away from the groove portion 230 is welded to the current collector plate 400. The battery cell 1 further includes an electrode assembly 500, the shell 100 includes a housing 110 and an end cap 120, an end of the housing 110 is provided with an opening 111, the end cap 120 covers the opening 111, the housing 110 includes a sidewall 112 and an end wall 113, the sidewall 112 surrounds an outer side of the electrode assembly 500, the end wall 113 is disposed opposite the opening 111, and the wall portion 101 is the end cap 120 or the end wall 113. The guide portion 320 and the second groove section 232 are each configured in a frustum shape with a cross-section gradually decreasing in a direction toward the interior of the shell 100. In the axial direction, an axial depth H2 of the first groove section 231 is less than an axial depth H6 of the second groove section 232.

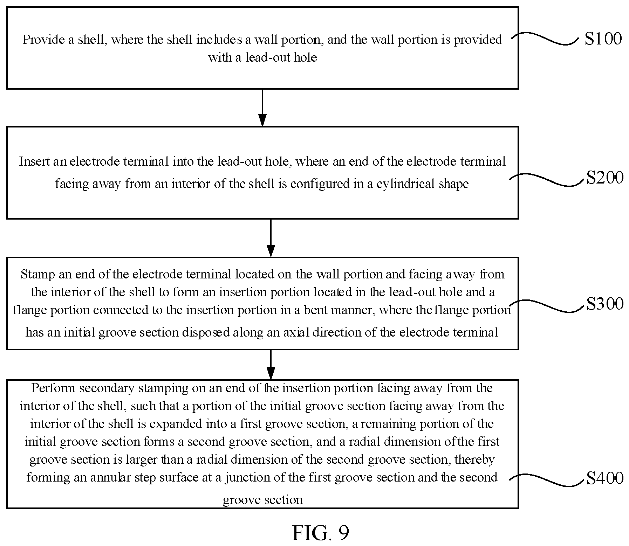

The housing assembly 100b can include the shell 100 and the electrode terminal 200. According to some embodiments of this application, as shown in FIG. 8 and FIG. 9, a manufacturing method described in the embodiments of the manufacturing method of the housing assembly 100b of this application includes the following steps:

S100: Provide a shell 100, where the shell 100 includes a wall portion 101, and the wall portion 101 is provided with a lead-out hole 102.
S200: Insert an electrode terminal 200 into the lead-out hole 102, where an end of the electrode terminal 200 facing away from an interior of the shell 100 is configured in a cylindrical shape.

Optionally, the end of the electrode terminal 200 facing away from the interior of the shell 100 is formed with the above-mentioned limiting flange 250 and sealing portion 240. The end of the electrode terminal 200 facing away from the interior of the shell 100 can be inserted into the lead-out hole 102 from the interior of the shell 100 and exposed from the lead-out hole 102.

S300: Stamp an end of the electrode terminal 200 located on the wall portion 101 and facing away from the interior of the shell 100 to form an insertion portion 210 located in the lead-out hole 102 and a flange portion 220 connected to the insertion portion 210 in a bent manner, where the flange portion 220 has an initial groove section 260 disposed along an axial direction of the electrode terminal 200.

The insertion portion 210 and the flange portion 220 are formed into a bent connection by stamping. An end of the initial groove section 260 facing away from the interior of the shell 100 may be provided with the above-mentioned transition fillet 900.

S400: Perform secondary stamping on an end of the insertion portion 210 facing away from the interior of the shell 100, such that a portion of the initial groove section 260 facing away from the interior of the shell 100 is expanded into a first groove section 231, a remaining portion of the initial groove section 260 forms a second groove section 232, and a radial dimension D5 of the first groove section 231 is larger than a radial dimension D6 of the second groove section 232, thereby forming an annular step surface 233 at a junction of the first groove section 231 and the second groove section 232.

The secondary stamping can flatten at least part of the above-mentioned transition fillet 900, forming at least part of the annular step surface 233.

Further, the housing assembly 100b may further include a sealing member 300. The sealing member 300 can be configured to seal the first groove section 231 and the second groove section 232, where the sealing member 300 includes a body portion 310 and a guide portion 320, the body portion 310 is disposed in the first groove section 231 and supported on the annular step surface 233, and the guide portion 320 is disposed in the second groove section 232.

For content not mentioned in the embodiments of the manufacturing method of the housing assembly of this application, reference can also be made to the relevant descriptions of the above battery cell embodiments, which are not repeated here.

According to some embodiments of this application, as shown in FIG. 2, the battery 100a includes the above-described battery cell 1. Such an arrangement can improve stability and reliability of the battery cell 1 during operation by enhancing a connection effect between the electrode terminal and the sealing member, thereby improving stability and reliability of the battery 100a during operation.

According to some embodiments of this application, as shown in FIG. 1, the electric apparatus includes the above-described battery 100a. Such an arrangement can improve stability and reliability of the battery cell 1 during operation, thereby improving stability and reliability of the battery 100a during operation, and further improving stability and reliability of the electric apparatus during operation.

In summary, in the embodiments of this application, the annular step surface 233 is provided and configured to abut against the body portion 310, thereby increasing the matching area between the body portion 310 of the sealing member 300 and the electrode terminal 200, while maintaining sufficient connection strength between the flange portion 220 and the insertion portion 210, thus improving a connection effect between the sealing member 300 and the electrode terminal 200. By providing the first groove section 231, the dimension of the battery cell 1 in the axial direction can be reduced, and the body portion 310 in the first groove section 231 can serve a limiting function to reduce the risk of the sealing member 300 slipping out of the groove portion 230 during the assembly process.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A battery cell, **characterized in that** the battery cell comprises:

   a shell, wherein the shell comprises a wall portion, and the wall portion is provided with a lead-out hole;
   an electrode terminal, wherein the electrode terminal comprises an insertion portion and a flange portion connected to each other along an axial direction of the electrode terminal, the insertion portion is disposed in the lead-out hole, the flange portion is located on a side of the insertion portion away from an interior of the shell, and in a radial direction of the electrode terminal, the flange portion at least partially extends beyond the insertion portion; and the electrode terminal has a groove portion disposed along the axial direction, wherein the groove portion comprises a first groove section and a second groove section, the first groove section is located at an end of the second groove section facing away from the interior of the shell, the first groove section is located in the flange portion, the second groove section is at least partially located in the flange portion, and a radial dimension of the first groove section is larger than a radial dimension of the second groove section, thereby forming an annular step surface at a junction of the first groove section and the second groove section; and
   a sealing member, wherein the sealing member is configured to seal the groove portion, the sealing member comprises a body portion and a guide portion, the body portion is disposed in the first groove section and supported on the annular step surface, the guide portion is disposed in the second groove section, the sealing member is fixedly connected to the electrode terminal, and the battery cell is electrically connected to the outside through the sealing member.

2. The battery cell according to claim 1, **characterized in that** an outer end surface of the body portion facing away from the interior of the shell protrudes beyond an outer end surface of the flange portion facing away from the interior of the shell, and the body portion is welded and fixed to the flange portion.

3. The battery cell according to claim 2, **characterized in that** the battery cell comprises an insulating member, wherein the insulating member surrounds a periphery of the electrode terminal and is located between the electrode terminal and the wall portion; and the electrode terminal, the sealing member, and the insulating member are arranged such that welding energy reflected from an outer peripheral surface of a protruding portion of the body portion relative to the flange portion and transmitted toward the insulating member is blocked by the outer end surface of the flange portion.

4. The battery cell according to claim 3, **characterized in that** the outer end surface of the flange portion protrudes beyond an outer end surface of the insulating member facing away from the interior of the shell, and satisfies the following relationship:

$$\arctan(H5/((D4-D3)/2)) > \arctan((H3-H2)/((D3-D2)/2)),$$

wherein H5 is a protruding height of the outer end surface of the flange portion relative to the outer end surface of the insulating member, D4 is a radial dimension of the outer end surface of the insulating member, D3 is a radial dimension of the outer end surface of the flange portion, H3 is an axial thickness of the body portion located in the first groove section, H2 is an axial depth of the first groove section, and D2 is a radial dimension of the outer end surface of the body portion.

5. The battery cell according to claim 2, **characterized in that** in the axial direction, a protruding height of the outer end surface of the body portion relative to the outer end surface of the flange portion is greater than or equal to 0.1 mm.

6. The battery cell according to claim 1, **characterized in that** in the axial direction, an axial thickness of the body portion located in the first groove section is less than or equal to 0.5 times a difference between an axial thickness of the flange portion and an axial depth of the first groove section, and the body portion is welded and fixed to the flange portion.

7. The battery cell according to claim 1, **characterized in that** an axial thickness of the body portion located in the first groove section is greater than or equal to 0.3 mm, and an axial depth of the first groove section is greater than or equal to 0.2 mm.

8. The battery cell according to claim 1, **characterized in that** in the radial direction, a difference between a radial dimension of the outer end surface of the body portion and a radial dimension of an inner ring edge of the annular step surface is greater than or equal to 0.3 mm.

9. The battery cell according to claim 1, **characterized in that** the outer end surface of the body portion facing away from the interior of the shell comprises a central region and a welding region surrounding the central region, wherein the central region is configured to be connected to an external conductive component, and the welding region is configured to be welded to the flange portion.

10. The battery cell according to claim 9, **characterized in that** the welding region is recessed toward the interior of the shell relative to the central region.

11. The battery cell according to claim 10, **characterized in that** in the axial direction, a recess depth of the welding region relative to the central region is greater than or equal to 0.1 mm.

12. The battery cell according to claim 10 or 11, **characterized in that** in the radial direction, a radial dimension of an inner ring edge of the welding region is less than or equal to a radial dimension of an inner ring edge of the annular step surface.

13. The battery cell according to claim 1, **characterized in that** in the radial direction, a radial dimension of the first groove section is less than or equal to a radial dimension of an outer peripheral surface of the insertion portion.

14. The battery cell according to claim 1, **characterized in that** the flange portion and the insertion portion are integrally formed and bent relative to the insertion portion, and the first groove section is formed by stamping.

15. The battery cell according to claim 1, **characterized in that** the flange portion and the insertion portion are integrally formed, and the electrode terminal comprises a sealing portion integrally formed with the insertion portion, wherein the sealing portion seals an end of the insertion portion facing the interior of the shell to form the groove portion.

16. The battery cell according to claim 15, **characterized in that** the groove portion is configured for injection of an electrolyte into the shell.

17. The battery cell according to claim 16, **characterized in that** the sealing portion is provided with an electrolyte injection hole, wherein the electrolyte injection hole implements a communication between the interior of the shell and the groove portion.

18. The battery cell according to claim 16 or 17, **characterized in that** the battery cell further comprises a current collector plate and an electrode assembly disposed inside the shell, wherein the current collector plate is configured to connect a tab of the electrode assembly and the electrode terminal, and a side of the sealing portion facing away from the groove portion is welded to the current collector plate.

19. The battery cell according to claim 1, **characterized in that** the battery cell further comprises an electrode assembly, the shell comprises a housing and an end cap, an end of the housing is provided with an opening, the end cap covers the opening, the housing comprises a sidewall and an end wall, the sidewall surrounds an outer side of the electrode assembly, the end wall is disposed opposite the opening, and the wall portion is the end cap or the end wall.

20. The battery cell according to claim 1, **characterized in that** the guide portion and the second groove section are each configured in a frustum shape with a cross-section gradually decreasing in a direction toward the interior of the shell.

21. The battery cell according to claim 1, **characterized in that** in the axial direction, an axial depth of the first groove section is less than an axial depth of the second groove section.

22. A manufacturing method of a housing assembly, **characterized in that** the manufacturing method comprises:

providing a shell, wherein the shell comprises a wall portion, and the wall portion is provided with a lead-out hole;
inserting an electrode terminal into the lead-out hole, wherein an end of the electrode terminal facing away from an interior of the shell is configured in a cylindrical shape;
stamping an end of the electrode terminal located on the wall portion and facing away from the interior of the shell to form an insertion portion located in the lead-out hole and a flange portion connected to the insertion portion in a bent manner, wherein the flange portion has an initial groove section disposed along an axial direction of the electrode terminal; and
performing secondary stamping on an end of the insertion portion facing away from the interior of the shell, such that a portion of the initial groove section facing away from the interior of the shell is expanded into a first groove section, a remaining portion of the initial groove section forms a second groove section, and a radial dimension of the first groove section is larger than a radial dimension of the second groove section, thereby forming an annular step surface at a junction of the first groove section and the second groove section.

23. A battery, **characterized by** comprising the battery cell according to any one of claims 1 to 22.

24. An electric apparatus, **characterized in that** the electric apparatus comprises the battery according to claim 23.

1000a

FIG. 1

100a

FIG. 2

FIG. 3

FIG. 4

FIG. 5

FIG. 6

FIG. 7

200

220
210
250

240

241

200

270    260

220
210
250

240

241

200

232    233    231

220
210
250

240

241

FIG. 8

Provide a shell, where the shell includes a wall portion, and the wall portion is provided with a lead-out hole — S100

Insert an electrode terminal into the lead-out hole, where an end of the electrode terminal facing away from an interior of the shell is configured in a cylindrical shape — S200

Stamp an end of the electrode terminal located on the wall portion and facing away from the interior of the shell to form an insertion portion located in the lead-out hole and a flange portion connected to the insertion portion in a bent manner, where the flange portion has an initial groove section disposed along an axial direction of the electrode terminal — S300

Perform secondary stamping on an end of the insertion portion facing away from the interior of the shell, such that a portion of the initial groove section facing away from the interior of the shell is expanded into a first groove section, a remaining portion of the initial groove section forms a second groove section, and a radial dimension of the first groove section is larger than a radial dimension of the second groove section, thereby forming an annular step surface at a junction of the first groove section and the second groove section — S400

FIG. 9

## INTERNATIONAL SEARCH REPORT

| International application No. |
|---|
| **PCT/CN2024/074995** |

**A. CLASSIFICATION OF SUBJECT MATTER**

H01M50/552(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 盖, 端子, 极柱, 注液, 孔, 封, 堵, 焊, 槽, battery, cell, cover, terminal?, liquid, inject+, hole, seal+, weld+, groove

**C. DOCUMENTS CONSIDERED TO BE RELEVANT**

| Category* | Citation of document, with indication, where appropriate, of the relevant passages | Relevant to claim No. |
|---|---|---|
| X | CN 218602700 U (NINGDE CONTEMPORARY AMPEREX TECHNOLOGY CO., LTD.) 10 March 2023 (2023-03-10) description, paragraphs 57-174, and figures 1-16 | 22-24 |
| Y | CN 218602700 U (NINGDE CONTEMPORARY AMPEREX TECHNOLOGY CO., LTD.) 10 March 2023 (2023-03-10) description, paragraphs 57-174, and figures 1-16 | 1-21, 23-24 |
| Y | CN 115621631 A (XIAMEN HAICHEN ENERGY STORAGE TECHNOLOGY CO., LTD.) 17 January 2023 (2023-01-17) description, paragraphs 47-88, and figures 1-2 and 7-10 | 1-21, 23-24 |
| A | CN 115832546 A (NINGDE CONTEMPORARY AMPEREX TECHNOLOGY CO., LTD.) 21 March 2023 (2023-03-21) entire document | 1-24 |
| A | CN 212392309 U (NINGDE CONTEMPORARY AMPEREX TECHNOLOGY CO., LTD.) 22 January 2021 (2021-01-22) entire document | 1-24 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 April 2024** | **10 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/074995** |

### C. DOCUMENTS CONSIDERED TO BE RELEVANT

| Category* | Citation of document, with indication, where appropriate, of the relevant passages | Relevant to claim No. |
|---|---|---|
| A | KR 20160084042 A (LG CHEMICAL LTD.) 13 July 2016 (2016-07-13)<br>entire document | 1-24 |

Form PCT/ISA/210 (second sheet) (July 2022)

**INTERNATIONAL SEARCH REPORT**
Information on patent family members

International application No.

**PCT/CN2024/074995**

| Patent document cited in search report | | | Publication date (day/month/year) | Patent family member(s) | | | Publication date (day/month/year) |
|---|---|---|---|---|---|---|---|
| CN | 218602700 | U | 10 March 2023 | None | | | |
| CN | 115621631 | A | 17 January 2023 | None | | | |
| CN | 115832546 | A | 21 March 2023 | None | | | |
| CN | 212392309 | U | 22 January 2021 | None | | | |
| KR | 20160084042 | A | 13 July 2016 | KR | 101820444 | B1 | 28 February 2018 |

Form PCT/ISA/210 (patent family annex) (July 2022)